Europäisches Patentamt

European Patent Office

Office européen des brevets

(11) Veröffentlichungsnummer: **0 075 235**
**A2**

## (12) EUROPÄISCHE PATENTANMELDUNG

(21) Anmeldenummer: 82108421.7

(22) Anmeldetag: 13.09.82

(51) Int. Cl.³: **C 08 F 297/04**

(30) Priorität: **19.09.81 DE 3137418**

(43) Veröffentlichungstag der Anmeldung: **30.03.83**
**Patentblatt 83/13**

(84) Benannte Vertragsstaaten: **BE DE FR GB NL**

(71) Anmelder: **BASF Aktiengesellschaft,**
**Carl-Bosch-Strasse 38, D-6700 Ludwigshafen (DE)**

(72) Erfinder: **Heinz, Gerhard, Dr., Im Vogelsang 2,**
**D-6719 Weisenheim (DE)**
Erfinder: **Mueller, Wolfgang F., Dr., Hahnenweg 20,**
**D-6730 Neustadt (DE)**

(54) **Blockcopolymerisat.**

(57) Die Erfindung betrifft ein Blockcopolymerisat, das mindestens 3 chemisch miteinander verknüpfe Polymerblöcke enthält. Das Blockcopolymerisat ist nur aus elastomeren Polymerblöcken aufgebaut, und zwar aus mindestens 2 Polymerblöcken a) mit einer Glastemperatur zwischen $-20°C$ und $+15°C$ und aus mindestens einem Polymerblock b) mit einer Glastemperatur unterhalb von $-20°C$, wobei der Polymerblock b) zwischen den Polymerblöcken a) angeordnet ist.

Die erfindungsgemässen Blockcopolymerisate werden zur Herstellung von Formmassen und Formteilen verwendet.

BASF Aktiengesellschaft                    O.Z.0050/035435

Blockcopolymerisat

Die Erfindung betrifft ein Blockcopolymerisat, das mindestens drei chemisch miteinander verknüpfte Polymerblöcke enthält.

Zum Stand der Technik nennen wir:

(1) DE-AS 16 45 298 und
(2) DE-AS 15 20 864

Die aus (1) oder (2) bekannten elastomeren Blockcopolymerisate des Typs A-B-A weisen im allgemeinen gute mechanische Eigenschaften auf. Derartige Blockcopolymerisate genügen jedoch den Anforderungen oft nicht, da niedrigere Schmelz- und Erweichungstemperaturen, niedrigere Schmelzviskosität, höhere Schmelzflußindices und eine bessere Löslichkeit in Kohlenwasserstoffen angestrebt werden. Es galt daher, die vorstehend genannten Nachteile zu beheben. Die Lösung dieser Aufgabe gelingt durch die im Patentanspruch 1 genannten Blockcopolymerisate.

Nachstehend wird der Aufbau der erfindungsgemäßen Blockcopolymerisate, die Herstellung dieser Blockcopolymerisate und deren Verwendung beschrieben.

Aufbau der erfindungsgemäßen Blockcopolymerisate

Das erfindungsgemäße Blockcopolymerisat ist aufgebaut aus mindestens drei chemisch miteinander verknüpften Polymerblöcken. Unter der chemischen Verknüpfung sollen dabei chemische Atombindungen verstanden werden, wie sie zwischen den am Aufbau der Polymerblöcke beteiligten Monomeren bestehen. Es können jedoch auch beispielsweise die Reste von mehrfunktionellen Kupplungsmitteln diese chemische Ver-

Vo/P

0075235

knüpfung entweder der Blöcke untereinander, wie dies von den verzweigten Blockcopolymerisaten bekannt ist, oder von Blöcken miteinander bewirken; die linearen Blockcopolymerisate sind jedoch bevorzugt.

Die erfindungsgemäßen Blockcopolymerisate enthalten keine thermoplastischen Blöcke und sind aus mindestens drei elastomeren Polymerblöcken aufgebaut, wobei zwischen zwei elastomeren Polymerblöcken a) mit einer Glasübergangstemperatur $Tg_a$ zwischen $-20^\circ C$ und $+15^\circ C$ ein von diesen beiden Polymerblöcken verschiedener elastomerer Polymerblock b) mit einer Glasübergangstemperatur $Tg_b$ unterhalb von $-20^\circ C$ angeordnet ist. Die elastomeren Polymerblöcke mit einer Glasübergangstemperatur zwischen $-20^\circ C$ und $+15^\circ C$ können dabei sowohl bezüglich ihres chemischen Aufbaus als auch bezüglich ihres Molekulargewichts gleich oder verschieden sein, wobei es sich als vorteilhaft herausgestellt hat, wenn diese elastomeren Polymerblöcke den gleichen Aufbau besitzen. Des weiteren können die erfindungsgemäßen Blockcopolymerisate auch mehrere z.B. 2, 3 oder 4 elastomere Polymerblöcke b) enthalten, sofern mindestens einer der elastomeren Polymerblöcke b) mit elastomeren Polymerblöcken a) chemisch verknüpft ist. Vorzugsweise kommen solche elastomeren Blockcopolymerisate zur Anwendung, bei denen die elastomeren Polymerblöcke a) endständig sind. Neben verzweigten Blockcopolymerisaten mit z.B. 3, 4 oder mehr Seitenästen gehören hierher insbesondere die linearen Fünfblock- oder Siebenblock-Copolymerisate. Besonders bevorzugt werden lineare elastomere Dreiblock-Copolymerisate, bei denen die beiden endständigen elastomeren Polymerblöcke a) durch einen mittelständigen elastomeren Polymerblock b) miteinander verbunden sind. Die nachstehenden näheren Ausführungen zum Aufbau gelten insbesondere für diese linearen 3-Blockcopolymerisate. Der Fachmann kann jedoch mit diesen Angaben ohne weiteres verzweigte oder auch höhere

0075235

lineare Blockcopolymerisate mit den gewünschten Eigenschaften darstellen.

Die elastomeren Blockcopolymerisate haben im allgemeinen Viskositätszahlen im Bereich von etwa 60 bis 300 ml/g und insbesondere von etwa 100 bis 230 ml/g, was einem mittleren Molekulargewicht $\bar{M}_V$ von 60.000 bis 300.000, vorzugsweise von etwa 100.000 bis 200.000 entspricht. Die elastomeren Polymerblöcke a) haben üblicherweise ein mittleres Molekulargewicht (Viskositätsmittel) im Bereich von 5.000 bis etwa 100.000; das mittlere Molekulargewicht (Viskositätsmittel) des elastomeren Polymerblocks b) liegt im allgemeinen im Bereich von etwa 20.000 bis 200.000. Dementsprechend kann der Anteil der einzelnen Polymerblöcke a) oder b) am Blockcopolymerisat in weiten Grenzen schwanken, z.B. können die elastomeren Polymerblöcke b) 10 bis 90 Gew.-% des gesamten Blockcopolymerisats ausmachen (a) z.B. 90 bis 10 Gew.-%). Sehr geeignete Blockcopolymerisate enthalten 40 bis 90 Gew.-% an elastomeren Polymerblöcken b) und 60 bis 10 Gew.-% an elastomeren Polymerblöcken a).

Die elastomeren Polymerblöcke a) sind insbesondere aus aliphatischen konjugierten Diolefinen und vinylaromatischen Kohlenwasserstoffen aufgebaut. Als Diolefine sind dabei die aliphatischen konjugierten Dienkohlenwasserstoffe mit 4 bis 5 C-Atomen, insbesondere Butadien und Isopren, bevorzugt. Unter den vinylaromatischen Kohlenwasserstoffen sind insbesondere Styrol und Styrol-Derivate, wie kern- und seitenkettensubstituierte Styrole, besonders geeignet. Styrol und Styrol-Derivate werden im folgenden aus Gründen der Einfachheit auch zusammenfassend als Styrol-Monomere bezeichnet. Als Beispiel für Styrol-Monomere seien genannt α-Methylolstyrol, Vinyltoluole, tert.-Butylstyrol und insbesondere Styrol selber.

0075235

Der elastomere Polymerblock b) kann beispielsweise ein reiner Polybutadien-Block oder Polyisoprenblock sein; bei diesem Polymerblock kann es sich jedoch auch gleichermaßen um ein Mischpolymerisat aus Butadien und Isopren oder aus Butadien und/oder Isopren und Styrol-Monomeren mit statistischer Verteilung der eingebauten Monomeren handeln. Sofern der elastomere Polymerblock b) Styrol-Monomere eingebaut enthält, ist der Anteil dieses Monomeren so zu bemessen, daß die Glasübergangstemperatur dieses Polymerblockes -20°C nicht übersteigt. Vorzugsweise handelt es sich bei dem oder den elastomeren Polymerblöcken b) um reine Polybutadienblöcke und insbesondere um reine Polyisoprenblöcke.

Die elastomeren Polymerblöcke a) des erfindungsgemäßen Blockcopolymerisates sind aufgrund ihrer unterschiedlichen Glasübergangstemperatur auch in ihrem chemischen Aufbau von dem elastomeren Polymerblock b) zu unterscheiden. Beispielsweise handelt es sich bei den elastomeren Polymerblöcken a) um einen Homopolymerisatblock aus Butadien, der mehr als z.B. 70 Gew.-% des Butadiens in 1;2-Konfiguration einpolymerisiert enthält; oder es kann sich um einen Homopolymerisatblock aus Isopren, der mehr als 40 Gew.-% des Isoprens in 3,4-Konfiguration einpolymerisiert enthält, handeln. Insbesondere stellen jedoch die elastomeren Polymerblöcke a) Copolymerisatblöcke aus den aliphatischen konjugierten Dienkohlenwasserstoffen mit 4 bis 5 C-Atomen, wie Butadien und/oder Isopren, und den Styrol-Monomeren dar, wobei der Copolymerisatblock die Comonomeren in statistischer Verteilung eingebaut enthält. Der Anteil der einpolymerisierten Dienkohlenwasserstoffe in einem solchen statistischen Copolymerisatblock beträgt zweckmäßigerweise 65 bis 30 Gew.-%, insbesondere 50 bis 30 Gew.-%; der des einpolymerisierten Styrol-Monomeren zweckmäßigerweise 35 bis 70 Gew.-%, insbesondere

0075235

50 bis 70 Gew.-%, jeweils bezogen auf das Gewicht des statistischen Copolymerisatblocks, wobei das Verhältnis der jeweiligen Comonomeren insbesondere durch die geforderte Glasübergangstemperatur des Polymerblocks begrenzt wird.

Als typisches Beispiel für die erfindungsgemäßen Blockcopolymerisate seien lineare Dreiblock-Copolymerisate genannt, deren beiden endständigen Polymerblöcke aus statistischen Copolymerisatblöcken von Styrol und Butadien und/oder Isopren gebildet werden, und deren mittelständiger Polymerblock ein Butadien- oder Isopren-Homopolymerisatblock ist.

Herstellung der Blockcopolymerisate

Die erfindungsgemäßen elastomeren Blockcopolymerisate können nach den für die Herstellung von Blockcopolymerisaten an sich bekannten und üblichen Verfahrensweisen und Techniken erhalten werden. Die Blockcopolymerisate aus den aliphatischen Dienkohlenwasserstoffen und den Styrol-Monomeren lassen sich beispielsweise vorteilhaft durch sequentielle anionische Polymerisation herstellen, wobei man in den Fällen, in denen statistische Copolymerisatblöcke aus den Comonomeren erhalten werden sollen, vorteilhafterweise nach der sogenannten Zulauftechnik arbeitet. Im übrigen sei bezüglich der Herstellverfahren für die Blockcopolymerisate auf die einschlägige Fachliteratur verwiesen (sequentielle Polymerisation und/oder Kopplung).

Für bestimmte Anwendungszwecke und verbesserte Oxidations- und Alterungsbeständigkeit können die erfindungsgemäßen Blockcopolymerisate auf Basis von Dien-Kohlenwasserstoffen

0075235

auch teilweise oder vollständig hydriert werden. Bei den hydrierten Blockcopolymerisaten kann es sich auch um selektiv hydrierte Produkte handeln, bei denen nur die olefinischen Doppelbindungen, nicht aber die aromatischen Doppelbindungen des Blockcopolymerisats hydriert worden sind.

Verwendung der erfindungsgemäßen Blockcopolymerisate

Die erfindungsgemäßen Blockcopolymerisate können nach den bekannten Verfahren der Thermoplastverarbeitung direkt verarbeitet werden, also z.B. durch Extrudieren, Spritzgießen, Kalandrieren, Hohlkörperblasen, Pressen oder Sintern. Besonders bevorzugt ist die Herstellung von Formkörpern bzw. Formteilen durch Spritzgießen. Zur Herstellung von Formkörpern unter Verwendung der erfindungsgemäßen Blockcopolymerisate können diese mit thermoplastischen Kunststoffen, insbesondere mit Standardpolystyrol in den dem Fachmann bekannten Grenzen abgemischt werden. Die erfindungsgemäßen Blockcopolymerisate eignen sich insbesondere auch als Schlagzähmodifier für die Herstellung von schlagzähem Polystyrol und dergleichen, d.h. sie können als Kautschuke zur Pfropfung verwendet werden.

Für die Herstellung von Abmischungen mit thermoplastischen Kunststoffen, wie Polystyrol, nichtelastomeren Blockcopolymerisaten, Kautschuken und z.B. S/AN Copolymerisaten, können übliche Zusatzstoffe, wie Stabilisatoren, Füllstoffe, Farbpigmente, äußere Gleitmittel, Weichmacher, Antistatika oder Treibmittel in dem Fachmann bekannten Mengen angewendet werden.

Die in den Beispielen und Vergleichsversuchen beschriebenen Parameter wurden wie folgt bestimmt:

1. Als Maß für das Molekulargewicht der Blockcopolymerisate

0075235

ist die Viskositätszahl, gemessen in 0,5 gew.-%iger Lösung in Toluol bei $25^{\circ}$C angegeben. Bestimmt wird dabei das Gewichtsmittel des Molekulargewichts.

2. Schmelzviskosität in $[Pa.s]$ gemessen bei $175^{\circ}$C und einer Schergeschwindigkeit von $10^{-2}$ Sekunden.

3. Die Fließfähigkeit, MFI, in $[g/10\ min]$ wurde anhand des Meltindex nach DIN 53 735 bei $175^{\circ}$C und 5,0 kp beurteilt.

4. Die Tg-Werte werden nach K.H. Illers und H. Breuer, Kolloid-Z. 176 (1961), Seite 110, bestimmt.

Die Erfindung wird nachstehend anhand von Beispielen näher erläutert. Alle darin angegebenen Teile und Prozente beziehen sich, sofern nichts anderes vermerkt ist, auf das Gewicht.

0075235

## Beispiel 1

Herstellung eines a-b-a-Dreiblockpolymerisates durch Kopplung von $(a-b_{1/2})$-Lithium

2.100 g reines, getrocknetes Cyclohexan werden unter $N_2$-Atmosphäre in einem 5-l-Normkessel (Edelstahl) vorgelegt, auf 60°C aufgeheizt und mit 8,8 mMol sek.-Butyllithium versetzt. Bei einer konstanten Innentemperatur von 60°C wird dann eine Mischung von 75 g (0,72 Mol) Styrol und 75 g (1,39 Mol) Butadien in 50 g Cyclohexan im Verlauf von 6 h kontinuierlich zudosiert (a-Block). Danach wird der b-Block anpolymerisiert; dazu werden 350 g (5,14 Mol) gereinigtes Isopren binnen 2 h derart zugefahren, daß die Innentemperatur 80°C nicht überschreitet. Die Kopplung der lebenden Polymerketten zum a-b-a-Dreiblockpolymeren erfolgt durch Zusatz von 0,4 g (4,4 mMol) destilliertem Essigsäureethylester (gelöst in 50 g Cyclohexan) zur Reaktionsmischung bei 60°C; zum vollständigen Umsatz wird noch 20 Minuten gerührt. Das Polymere wird durch Eingießen der Lösung in Ethanol gefällt und anschließend bei 60°C im Vakuumtrockenschrank getrocknet. (Aufbau und Zusammensetzung des erhaltenen Polymeren s. Tabellen 1 und 2.)

## Beispiel 2

Herstellung eines a-b-a-Dreiblockpolymerisates durch sequentielle Polymerisation der Blöcke

2.100 g reines, getrocknetes Cyclohexan werden unter $N_2$-Atmosphäre in einem 5-l-Normkessel (Edelstahl) vorgelegt, auf 60°C aufgeheizt und mit 4,4 mMol sek.-Butyllithium versetzt. Bei konstanter Innentemperatur von 60°C wird eine Mischung von 50 g (0,48 Mol) Styrol und 25 g (0,46 Mol)

0075235

Butadien in 100 g Cyclohexan im Verlauf von 5 h kontinuierlich in den Kessel gefahren (a-Block). Zur Polymerisation
des b-Blocks werden 350 g (5,14 Mol) Isopren innerhalb von
2 h derart zur Reaktionsmischung zugegeben, daß eine maximale Innentemperatur von 80°C nicht überschritten wird. Anschließend wird der zweite a-Block anpolymerisiert, indem
nochmals eine Mischung von 50 g (0,48 Mol) Styrol und 25 g
(0,46 Mol) Butadien in 100 g Cyclohexan bei 60°C innerhalb
von 5 h kontinuierlich zur Reaktionsmischung gegeben wird.
Nach beendeter Polymerisation werden die lebenden Polymerketten durch Zusatz einer protonenaktiven Verbindung desaktiviert. Das Polymere wird durch Eingießen der Lösung in
Ethanol gefällt und anschließend bei 60°C im Vakuumtrockenschrank getrocknet. (Aufbau und Zusammensetzung des erhaltenen Polymeren s. Tabellen 1 und 2.)

Die bei Beispiel 1 und 2 notwendigen, langen Zulaufzeiten
zur Herstellung des statistisch aufgebauten a-Blocks können
in bekannter Weise durch Zusatz polarer Komponenten, sog.
Randomizer, wie aliphatische oder aromatische Ether oder
tertiäre Amine, zum Lösungsmittel Cyclohexan wesentlich verkürzt werden. Diese Randomizer erhöhen den Anteil des 1,2-
Butadiens im a-Block und des 3,4-Isoprens im b-Block.

Beispiel 3

Herstellung eines a-b-a-Dreiblockpolymerisates durch
Kopplung in THF-haltigem Cyclohexan

Es werden 2.100 g Cyclohexan und 6,2 g (8,8 mMol) THF unter
$N_2$-Atmosphäre in einen 5-l-Normkessel (Edelstahl) vorgelegt, auf 60°C aufgeheizt und mit 8,8 mMol sek.-Butyllithium versetzt. Die Monomerenmischung von 75 g (0,72 Mol)
Styrol und 75 g (1,39 Mol) Butadien in 50 g Cyclohexan
wird innerhalb von 3 h kontinuierlich zudosiert. Die Poly-

0075235

merisation des b-Blockes, die Kopplung und die Aufarbeitung des Blockcopolymerisats erfolgen wie in Beispiel 1 beschrieben.

0075235

Tabelle 1

| Beispiel | Zusammensetzung | | VZ | | | $\bar{M}_V$ | Block | Kopplungs- |
| | a-Block % S/% Bu | b-Block % I | a | a-b bzw. a-b$_{1/2}$* | a-b-a | a-b-a | S % | Ausbeute % |
|---|---|---|---|---|---|---|---|---|
| 1 | 15/15 | 70 | 23 | 79* | 117 | 125.000 | 0,2 | 96,2 |
| 2 | 20/10 | 70 | 20 | 101 | 115 | 123.000 | 0,3 | – |
| 3 | 15/15 | 70 | 25 | 82* | 120 | 127.000 | <0,1 | 92,1 |
| 4 | 20/10 | 70 | 19 | 97 | 117 | 125.000 | 0,1 | – |

S = Styrol, Bu = Butadien, I = Isopren

Tabelle 2

| Beispiel | IR-Analysen[*] | | | | |
|---|---|---|---|---|---|
| | Styrol % | Gesamtisopren % | 3,4 Isopren % | Butadien 1,4-trans % | 1,2 % |
| 1 | 14,9 | 67,8 | 12,1 | 8,2 | 1,6 |
| 2 | 20,3 | 68,9 | 11,8 | 5,8 | 1,1 |
| 3 | 14,5 | 69,4 | 21,7 | 9,7 | 4,2 |
| 4 | 19,8 | 69,3 | 20,6 | 6,5 | 2,8 |

[*] alle %-Angaben beziehen sich auf das Blockcopolymerisat (a-b-a)

## Beispiel 4

Herstellung eines a-b-a-Dreiblockpolymerisats durch sequentielle Polymerisation in Gegenwart von THF

Die Herstellung erfolgt, wie in Beispiel 2 beschrieben, aber mit dem Unterschied, daß dem Lösungsmittel Cyclohexan 3,1 g (44 mMol) THF zugesetzt werden, und daß das Monomerengemisch Styrol/Butadien bei der Polymerisation der beiden a-Blöcke jeweils innerhalb von 2,5 h kontinuierlich zudosiert wird.

Die Eigenschaften der in den Beispielen beschriebenen Produkte sind in Tabelle 3 aufgeführt.

Tabelle 3

| Beispiel | $Tg_a$ °C | $Tg_b$ °C | MFI (g/10 min) | Schmelzviskosität (Pa . s) |
|---|---|---|---|---|
| 1 | - 9 | -48 | 14,9 | 5.200 |
| 2 | +14 | -52 | 15,5 | 4.800 |
| 3 | -11 | -44 | 14,3 | 5.400 |
| 4 | +13 | -46 | 14,8 | 5.200 |

0075235

## Patentansprüche

1. Blockcopolymerisat,

enthaltend mindestens 3 chemisch miteinander verknüpfte Polymerblöcke, <u>dadurch gekennzeichnet</u>, daß das Blockcopolymerisat nur aus elastomeren Polymerblöcken aufgebaut ist, wobei am Aufbau

a) mindestens 2 Polymerblöcke mit einer Glastemperatur zwischen -20°C und +15°C und

b) mindestens ein Polymerblock mit einer Glastemperatur unterhalb von -20°C beteiligt sind,
mit der Maßgabe, daß der Polymerblock b) zwischen Polymerblöcken a) angeordnet ist.

2. Formmassen, enthaltend Blockcopolymerisate gemäß Patentanspruch 1.

3. Formteile aus Formmassen gemäß Patentanspruch 2.